# EUROPEAN PATENT SPECIFICATION

(11) **EP 0 507 007 B1**
(45) Date of publication and mention of the grant of the patent: **10.05.1995**
(21) Application number: 91122401.2
(22) Date of filing: 30.12.1991
(51) Int. Cl.: B62M 19/00, B62M 23/02

(54) **Pneumatic type auxiliary driving apparatus in bicycle**
Pneumatische Hilfseinrichtung für Fahrrad
Dispositif pneumatique d'entraînement complémentaire pour bicyclette

(30) Priority: 01.04.1991 JP 94782/91
(43) Date of publication of application: 07.10.1992
(73) Proprietor: NEMOTO PROJECT INDUSTRY CO., LTD., Yachiyo-shi Chiba-ken, 276 (JP)
(72) Inventor: Nemoto, Isao, c/o Nemoto Project Industry Co.,Ltd., Yachiyo-shi, Chiba-ken (JP)
(74) Representative: Schaumburg, Thoenes & Thurn

(56) References cited:
- DE-A- 3 227 224
- US-A- 1 410 326
- US-A- 4 078 816
- PATENT ABSTRACTS OF JAPAN vol. 15, no. 194 (M-1114)20 May 1991 & JP-A-03 050 086 (TSUTOMU KOIZUMI) 4 March 1991

## Description

The present invention relates to an apparatus according to the preamble of claim 1 or 6. An apparatus of this kind is described in US-A-1 410 326.

In this apparatus the rotational energy of a bicycle's wheels is accumulated on a downhill road, so that the accumulated energy can be used as auxiliary power on level ground or an uphill road. However, the pneumatic compressing means and the pneumatic power releasing means are separate devices which are to be manually activated.

The object of the present invention is to provide an auxiliary driving apparatus of a bicycle in which the rotational energy of the wheels of the bicycle is accumulated in the form of compressed air which can be used at a later time of need without the requirement of separate devices for compression and power release.

The above object is fulfilled according to the present invention by a pneumatic type auxiliary driving apparatus according to claim 1 and by a pneumatic type auxiliary driving apparatus according to claim 6.

With this construction, the valve mechanism is switched to the accumulation position on a slope, for example, to accumulate the compressed air in the air tank, and the valve mechanism is brought into the operational position when auxiliary power is necessary to drive the wheel with the help of the accumulated compressed air.

### BRIEF DESCRIPTION OF THE DRAWINGS

The invention will be explained below in detail with reference to the accompanying drawings, in which;
Fig. 1A is a diagram of connection of a pneumatic type auxiliary driving apparatus of a bicycle according to an embodiment of the present invention.
Fig. 1B is a diagram of connection of an embodiment in an operational position different from Fig. 1A.
Fig. 1C is a diagram of connection of an embodiment in an operational position different from Figs. 1A and 1B.
Fig. 1D is a diagram of connection of an embodiment in an operational position different from Figs. 1A, 1B and 1C.
Fig. 2 is a block diagram of a control system of the above-mentioned embodiment.

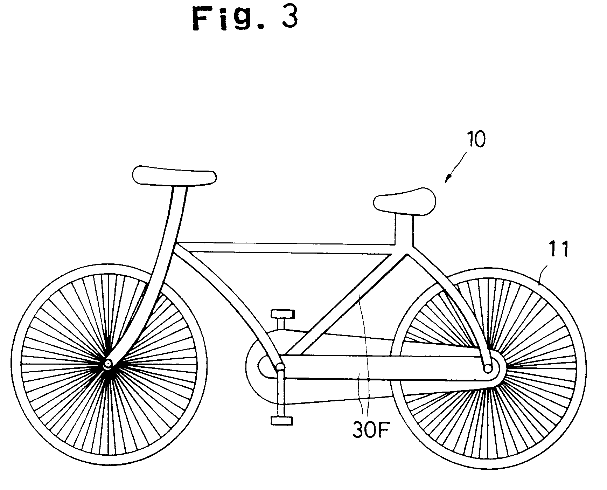

Fig. 3 is a side elevational view of a whole bicycle.
Fig. 4 is a schematic view of a connection of a wheel, a clutch mechanism and a rotor.
Fig. 5 is a sectional view of another embodiment of a pneumatic compressing mechanism used in the present invention.

### DESCRIPTION OF THE PREFERRED EMBODIMENT

A rotor 13 is coaxially supported by a wheel, for example a rear wheel 11 of a bicycle 10 through a clutch mechanism 12. The clutch mechanism 12 is controlled by a clutch control means 14 to selectively connect the rotor 13 to the rear wheel 11 or disconnect the rotor 13 from the rear wheel 11 so as to control the rotation of the rotor. The clutch mechanism 12 and the clutch control means 14 are per se known. Either a dry type or wet type may be employed as the clutch mechanism 12.

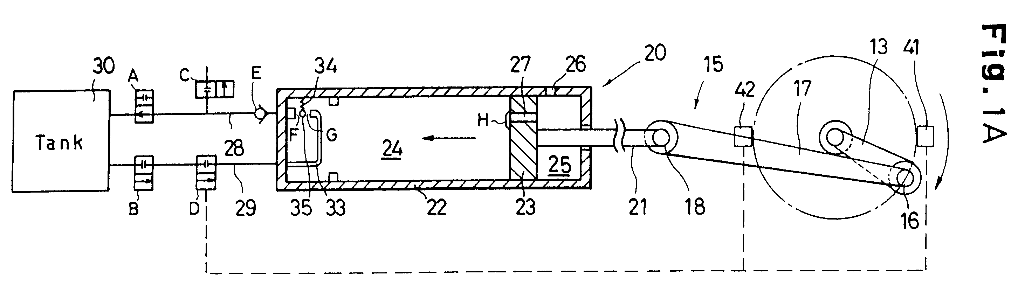

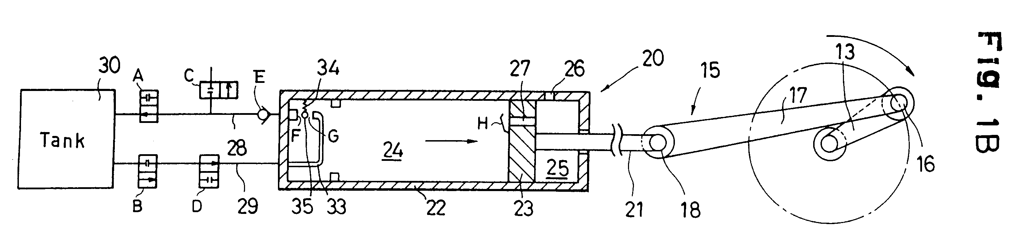

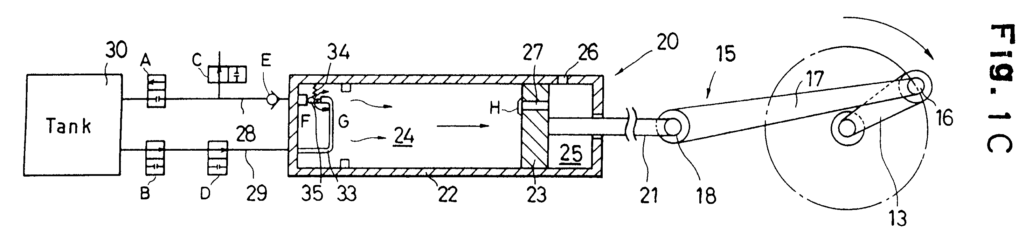

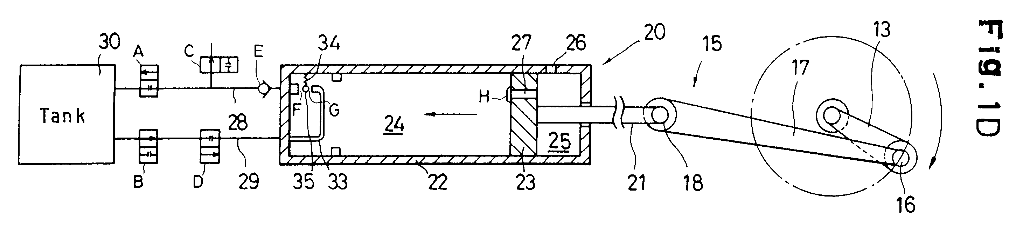

The rotor 13 is formed as a crank arm 13, as can be seen in Figs. 1A through 1D, and is connected at its free end to one end of a connecting rod 17 through a shaft 16. The other end of the connecting rod 17 is connected to a piston rod 21 of a pneumatic compressing mechanism 20 through a shaft 18.

The pneumatic compressing mechanism 20 includes a cylinder 22 and a piston 23 fitted in the cylinder 22. The piston rod 21 is secured to the piston 23. The piston 23 divides the inside of the cylinder 22 into a pressure chamber 24 and a discharge chamber 25. The discharge chamber 25 is connected to the atmosphere by a discharge port 26. The piston 23 is provided with a connecting passage 27 which connects the pressure chamber 24 and the discharge chamber 25 and an opening and closing valve H which opens and closes the connecting passage 27 in accordance with the pressure difference between the pressure chamber 24 and the discharge chamber 25.

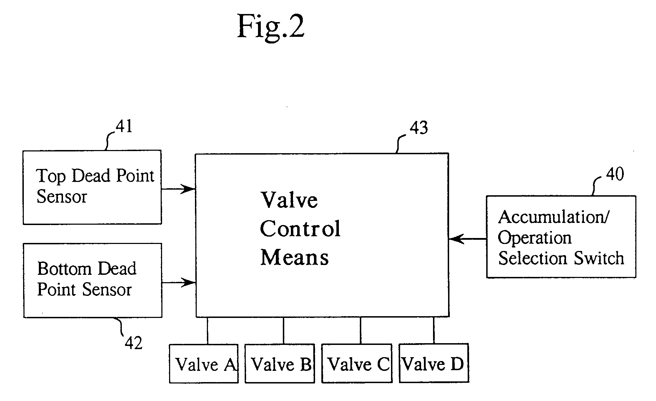

The pressure chamber 24 is connected to an air tank 30 through two air passages 28 and 29. The air passage 28 has therein a check valve E, a connection and disconnection switching valve A, and a connection and disconnection switching valve C for connecting the air passage 28 to the atmosphere. The air passage 29 has therein a connection and disconnection switching valve B and a top and bottom dead point sensitive valve D. The connection and disconnection switching valves A, B and C selectively occupy a first position (accumulation position) shown in Figs. 1A and 1B and a second position (auxiliary operational position) shown in Figs. 1C and 1D by an accumulation/operation selecting switch 40 (Fig. 2) for switching the valves between the accumulation position and the operational position. The top and bottom dead point responsive valve D is responsive to a top dead point sensor 41 and a bottom dead point sensor 42 to selectively occupy the first position (disconnection state) in Figs. 1A and 1D and the second position (connection state) in Figs. 1B and 1C, respectively. The switching of the valves A through D is controlled by a valve control means 43 shown in Fig. 2.

The air passage 29 is connected to a conduit 33 provided in the cylinder 22. The conduit 33 is exposed at its open end G to the inside of the pressure chamber 24. An opening F of the air passage 28 is opposed to the opening G inside the pressure chamber 24. Between the openings F and G is provided a valve ball 35 which hangs from the cylinder through a hanging line 34. The valve ball 35 plugs the opening F of the air passage 28 when the compressed air is ejected from the opening G of the conduit 33.

The clutch control means 14 and the accumulation/operation selecting switch 40 are located in the vicinity of the handle bars of the bicycle 10 or in a place where a rider can easily operate them. The air tank 30 can be provided externally to the body of the bicycle 10, but at least a part thereof is preferably constituted within a hollow body frame 30F.

The apparatus of the present invention operates as follows.

In a normal riding state, the clutch mechanism 12 is disconnected by the clutch control mechanism 14 to disconnect the rear wheel 11 from the rotor 13, so that the bicycle is operated as a normal bicycle.

On the other hand, if a cyclist wants to accumulate the inertial energy of the bicycle while riding on a downhill slope, for example, the crank arm 13 is connected to the rear wheel 11 by the clutch control means 14 and the clutch mechanism 12, and at the same time, the valves A through D are brought into the position shown in Figs. 1A and 1B, by the accumulation/operation selecting switch 40 (the operations of the clutch control means 14 and the accumulation/operation selecting switch 40 are preferably interrelated). At this time, the connection and disconnection switching valve A opens the air passage 28 and the connection and disconnection switching valve B closes the air passage 29, while the connection and disconnection switching valve C prevents the passage of air between the air passage 28 and the atmosphere.

Figure 1A shows a compression process from the top dead point of the crank arm 13 to the bottom dead point thereof. The piston 23 moves to compress the air in the compression chamber 24, so that the compressed air is accumulated in the air tank 30 through the opening F of the air passage 28, the check valve E, and the connection and disconnection switching first valve A. As the pressure in the pressure chamber 24 is higher than that of the discharge chamber 25, the opening and closing valve H is closed.

When the crank arm 13 reaches the bottom dead point, at which point the piston 23 begins to move in the opposite direction, a sudden pressure drop in the discharge chamber 25 takes place, and accordingly, the opening and closing valve H opens (Fig. 1B). Consequently, the piston 23 is returned to its original position with minimal force. Thereafter, the cycle is repeated and the air is again compressed into the air tank 30 by the reciprocal movement of the piston 23. In the position shown in Fig. 1B, the check valve E and the connection and disconnection switching valve B intercept the flow of air into the pressure chamber 24 from the air tank 30. When the top dead point and the bottom dead point of the crank arm 13 are detected by the top dead point sensor 41 and the bottom dead point sensor 42, the top and bottom dead point responsive valve D closes or opens the air passage 29, respectively, but in the accumulation process mentioned above, the connection and disconnection switching valve B closes the air passage 29, and accordingly, the operation of the top and bottom dead point responsive valve D has no influence on the accumulation operation.

After the compressed air is accumulated in the air tank 30 in the accumulation process, when the accumulation/operation selection switch 40 is switched to the operational position, the three connection and disconnection switching valves A, B and C are switched through the valve control means 43. Namely, the connection and disconnection switching valve A closes the air passage 28, the connection and disconnection switching valve B opens the air passage 29, and the connection and disconnection switching valve C connects the air passage 28 to the atmosphere. As a result, as can be seen in Fig. 1D, during the movement of the crank arm 13 from the bottom dead point to the top dead point, the compressed air in the air tank 30 is injected through the connection and disconnection switching valve B, the top and bottom dead point responsive valve D, the air passage 29, the conduit 33 and the opening G into the pressure chamber 24, so that the pressure in the pressure chamber 24 increases. The compressed air injected from the opening G causes the valve ball 35 to plug the opening F thereby closing the air passage 28. Namely, since the compressed air injected into the pressure chamber 24 can not be discharged therefrom, the compressed air moves the piston 23, so that the crank arm 13 of the crank mechanism 15 rotates from the bottom dead point to the top dead point. Namely, the auxiliary rotational force is exerted on the rear wheel 11.

When the crank arm 13 reaches the top dead point, the position is detected by the top dead point sensor 41, so that the top and bottom dead point responsive valve D is switched to close the air passage 29. As a result, the feed of the compressed air from the air tank 30 into the pressure chamber 24 stops, so that the valve ball 35 is detached from the opening F of the air passage 28. The pressure chamber 24 communicates with the atmosphere through the check valve E, the air passage 28, and the connection and disconnection switching third valve C. Consequently, the piston 23 is moved to the bottom dead point with minimal force. When the crank arm 13 reaches the bottom dead point, it is detected by the bottom dead point sensor 42 to switch the top and bottom dead point responsive valve D, thereby opening the air passage 29. Thereafter, the operations mentioned above are repeated, so that the auxiliary power can be obtained until the compressed air in the air tank 30 is exhausted.

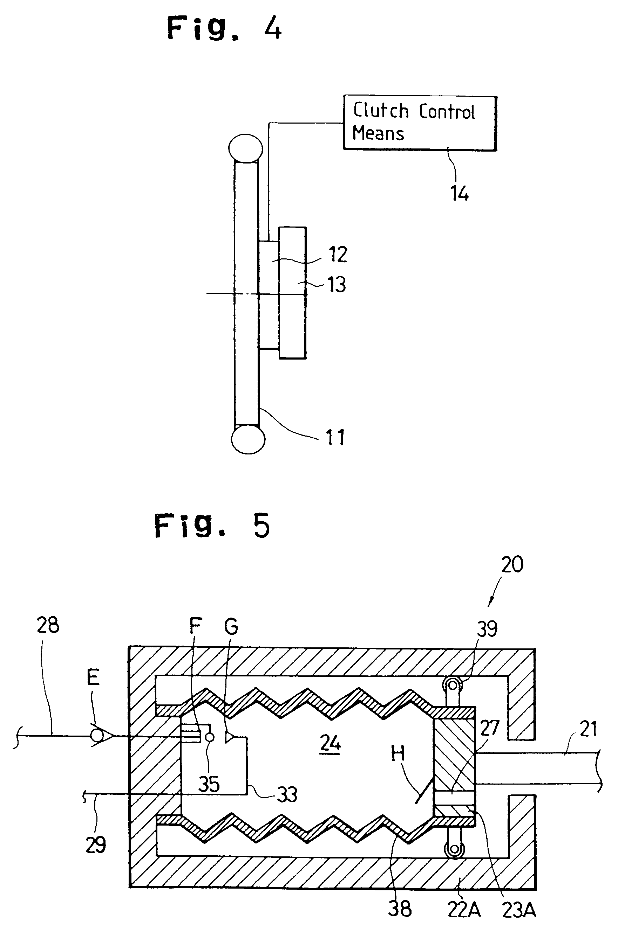

Figure 5 shows a different embodiment of the air compressing mechanism 20. In this embodiment, the pressure chamber 24 is constituted by a flexible bellows 38 which is connected at its one end to a piston 23A. The opposite end of the flexible bellows 38 is secured to an end inner wall of the cylinder 22A. The piston 23A is provided with rollers 39 which come into contact with the inner surface of the cylinder 22A in a rolling manner. In this embodiment, the operation similar to that of the first embodiment can be obtained, and additionally, the resistance against the movement of the piston 23A is smaller than that of the piston 23, thus resulting in a realization of a more effective apparatus.

As can be understood from the foregoing, in the pneumatic type auxiliary driving apparatus of a bicycle according to the present invention, the rotational energy of the wheel of the bicycle is accumulated in the air tank as compressed air, so that when additional power is necessary, the auxiliary power can be transmitted to the wheel through the accumulated compressed air. Therefor, the invention can be used as a simple auxiliary driving apparatus. If at least a part of the space within the body frame is used as the air tank, the apparatus of the invention can be easily attached to an existing bicycle without increasing the size thereof.

## Claims

1. A pneumatic type auxiliary driving apparatus in a bicycle (10), comprising:
a rotor (13) connected to a wheel (11) of the bicycle (10);
a pneumatic compressing means (20) which compresses air in accordance with the rotation of said rotor (13);
an accumulating means (30) which accumulates the air compressed by said pneumatic compressing means (20); and,
a pneumatic power releasing means (B,D) which transmits rotational power to said rotor (13) by means of the compressed pneumatic air accumulated in said accumulating means (30) wherein said accumulating means (30) has a valve mechanism (A,B,C,D,E) which is connected to said compressing means (20) and has an accumulating position in which air is compressed by the rotation of said rotor (13), characterized in that said valve mechanism (A,B,C,D,E) further has an auxiliary operational position in which the compressed air accumulated in said accumulating means (30) is fed to said pneumatic compressing means (20) to rotate said rotor (13) through a crank mechanism (17,21).

2. A pneumatic type auxiliary driving apparatus in a bicycle according to claim 1, wherein said pneumatic compressing means (20) comprises a cylinder device having a cylinder (22), a piston (23) which is moveably fitted in said cylinder (22), and a crank mechanism (17,21) which is connected to said rotor (13) and said piston (23).

3. A pneumatic type auxiliary driving apparatus in a bicycle according to claim 1 or 2, further comprising a switching mean (40) which selectively uses said accumulating means (30) and said pneumatic compressing means (20).

4. A pneumatic type auxiliary driving apparatus in a bicycle according to anyone of claims 1 to 3, wherein a clutch mechanism (12) is provided between said rotor (13) and said wheel (11) of said bicycle (10).

5. A pneumatic type auxiliary driving apparatus in a bicycle according to anyone of claims 1 to 4, wherein at least a part of said accumulating means (30) is constituted in a space within a body frame (30F) of said bicycle (10).

6. A pneumatic type auxiliary driving apparatus in a bicycle, comprising:
a rotor (13) connected to a wheel (11) of said bicycle (10);
a pneumatic compressing mechanism (20) connected to said rotor (13) through a crank mechanism (17,21); and
an air tank (30) connected to said pneumatic compressing mechanism (20) through a valve mechanism (A,B,C,D,E); characterized by
a valve control means (43) for switching said valve mechanism (A,B,C,D,E) between an accumulation position, in which the air is compressed by the rotation of said rotor (13) through said crank mechanism (17,21) and said pneumatic compressing mechanism (20) so that said compressed air is accumulated in said air tank (30), and an auxiliary operational position in which said compressed air accumulated in said air tank (30) is fed to said pneumatic compressing mechanism (20) to rotate said rotor (13) through said crank mechanism (17,21) and a clutch mechanism (12) connecting said wheel (11) with said rotor (13).

7. A pneumatic type auxiliary driving apparatus in a bicycle according to claim 6, wherein at least a part of said air tank (30) is constituted in a space within a body frame (30F) of said bicycle (10).

## Patentansprüche

1. Pneumatische Hilfsantriebsvorrichtung in einem Fahrrad (10), umfassend:
einen Rotor (13), der mit einem Rad (11) des Fahrrads (10) verbunden ist;
eine Luftverdichtungseinrichtung (20), die Luft entsprechend der Drehung des Rotors (13) verdichtet;
eine Speichereinrichtung (30), welche die von der Luftverdichtungseinrichtung (20) verdichtete Luft speichert;
und eine Einrichtung (B,D) zur Abgabe pneumatischer Energie, die mittels der in der Speichereinrichtung (30) gespeicherten Druckluft eine Drehkraft auf den Rotor (13) überträgt, wobei die Speichereinrichtung (30) einen Ventilmechanismus (A,B,C,D,E) hat, der mit der Luftverdichtungseinrichtung (20) verbunden ist und über eine Speicherposition verfügt, in welcher durch die Drehung des Rotors (13) Luft verdichtet wird, dadurch gekennzeichnet, daß der Ventilmechanismus (A,B,C,D,E) ferner über eine Hilfsbetriebsposition verfügt, in welcher die in der Speichereinrichtung (30) gespeicherte Druckluft der Luftverdichtungseinrichtung (20) zugeleitet wird, um den Rotor (13) über einen Kurbelmechanismus (17,21) zu drehen.

2. Pneumatische Hilfsantriebsvorrichtung in einem Fahrrad nach Anspruch 1, in welcher die Luftverdichtungseinrichtung (20) eine Zylindervorrichtung mit einem Zylinder (22), einem in dem Zylinder (22) beweglich gelagerten Kolben (23) und einem mit dem Rotor (13) und dem Kolben (23) verbundenen Kurbelmechanismus (17,21) umfaßt.

3. Pneumatische Hilfsantriebsvorrichtung in einem Fahrrad nach Anspruch 1 oder 2, die ferner eine Schalteinrichtung (40) zur selektiven Benutzung der Speichereinrichtung (30) und der Luftverdichtungseinrichtung (20) umfaßt.

4. Pneumatische Hilfsantriebsvorrichtung in einem Fahrrad nach einem der Ansprüche 1 bis 3, in welcher zwischen dem Rotor (13) und dem Rad (11) des Fahrrads (10) ein Kupplungsmechanismus (12) vorgesehen ist.

5. Pneumatische Hilfsantriebsvorrichtung in einem Fahrrad nach einem der Ansprüche 1 bis 4, in welcher zumindest ein Teil der Speichereinrichtung (30) in einem Raum innerhalb eines Rahmens (30F) des Fahrrads (10) gebildet ist.

6. Pneumatische Hilfsantriebsvorrichtung in einem Fahrrad, umfassend:
einen Rotor (13), der mit einem Rad (11) des Fahrrads (10) verbunden ist;
einen Luftverdichtungsmechanismus (20), der über einen Kurbelmechanismus (17,21) mit dem Rotor (13) verbunden ist,
und einen Luftbehälter (30), der über einen Ventilmechanismus (A,B,C,D,E) mit dem Luftverdichtungsmechanismus (20) verbunden ist,
gekennzeichnet durch eine Ventilsteuereinrichtung (43) zum Schalten des Ventilmechanismus (A,B,C,D,E) zwischen einer Speicherposition, in welcher durch die über den Kurbelmechanismus (17,21) erfolgende Drehung des Rotors (13) und durch den Luftverdichtungsmechanismus (20) Luft derart verdichtet wird, daß diese verdichtete Luft in dem Luftbehälter (30) gespeichert wird, und einer Hilfsbetriebsposition, in der die in dem Behälter (30) gespeicherte Druckluft dem Luftverdichtungsmechanismus (20) zugeleitet wird, um den Rotor (13) über den Kurbelmechanismus (17,21) und einen das Rad (11) mit dem Rotor (13) verbindenden Kupplungsmechanismus anzutreiben.

7. Pneumatische Hilfsantriebsvorrichtung in einem Fahrrad nach Anspruch 6, in welcher zumindest ein Teil des Luftbehälters (30) in einem Raum innerhalb eines Rahmens (30F) des Fahrrads (10) gebildet ist.

## Revendications

1. Dispositif d'entraînement auxiliaire du type pneumatique pour une bicyclette (10), comprenant :
un rotor (13) relié à une roue (11) de la bicyclette (10),
un moyen (20) de compression pneumatique qui comprime de l'air en fonction de la rotation dudit rotor (13),
un moyen (30) d'accumulation qui accumule l'air comprimé par ledit moyen (20) de compression pneumatique, et
un moyen de libération d'énergie pneumatique (B, D) qui transmet de l'énergie de rotation audit rotor (13) au moyen de l'air comprimé accumulé dans ledit moyen d'accumulation (30), dans lequel ledit moyen d'accumulation (30) comporte un mécanisme à soupapes (A, B, C, D, E) qui est relié audit moyen de compression (20) et qui présente une position d'accumulation dans laquelle de l'air est comprimé par la rotation dudit rotor (13), caractérisé en ce que ledit mécanisme à soupapes (A, B, C, D, E) comporte en outre une position fonctionnelle auxiliaire dans laquelle l'air comprimé accumulé dans ledit moyen d'accumulation (30) est délivré audit moyen de compression pneumatique (20) afin de faire tourner ledit rotor (13) par l'intermédiaire d'un mécanisme à bielle et manivelle (17, 21).

2. Dispositif d'entraînement auxiliaire du type pneumatique pour une bicyclette selon la revendication 1, dans lequel ledit moyen de compression pneumatique (20) comprend un agencement à cylindre comportant un cylindre (22), un piston (23) qui est ajusté avec possibilité de déplacement dans ledit cylindre (22), et un mécanisme à bielle et manivelle (17, 21) qui est relié audit rotor (13) et audit piston (23).

3. Dispositif d'entraînement auxiliaire du type pneumatique pour une bicyclette selon la revendication 1 ou la revendication 2, comprenant en outre un moyen (40) de commutation qui utilise de manière sélective ledit moyen d'accumulation (30) et ledit moyen de compression pneumatique (20).

4. Dispositif d'entraînement auxiliaire du type pneumatique pour une bicyclette selon l'une quelconque des revendications 1 à 3, dans lequel un mécanisme d'embrayage (12) est prévu entre ledit rotor (13) et ladite roue (11) de la bicyclette (10).

5. Dispositif d'entraînement auxiliaire du type pneumatique pour une bicyclette selon l'une quelconque des revendications 1 à 4, dans lequel une partie au moins dudit moyen d'accumulation (30) est agencée dans un espace à l'intérieur d'un élément de cadre (30F) de ladite bicyclette (10).

6. Dispositif d'entraînement auxiliaire du type pneumatique pour une bicyclette, comprenant :
un rotor (13) relié à une roue (11) de ladite bicyclette (10),
un mécanisme de compression pneumatique (20) relié audit rotor (13) par l'intermédiaire d'un mécanisme à bielle et manivelle (17, 21), et
un réservoir d'air (30) relié audit mécanisme de compression pneumatique (20) par l'intermédiaire d'un mécanisme à soupapes (A, B, C, D, E), caractérisé par
un moyen de commande de soupapes (43) destiné à commuter ledit mécanisme à soupapes (A, B, C, D, E) entre une position d'accumulation, dans laquelle l'air est comprimé par la rotation dudit rotor (13) par l'intermédiaire dudit mécanisme à bielle et manivelle (17, 21) et dudit mécanisme de compression pneumatique (20) de telle sorte que cet air comprimé soit accumulé dans ledit réservoir d'air (30), et une position fonctionnelle auxiliaire dans laquelle cet air comprimé accumulé dans ledit réservoir d'air (30) est délivré audit mécanisme de compression pneumatique (20) afin de faire tourner ledit rotor (13) par l'intermédiaire dudit mécanisme à bielle et manivelle (17, 21), et un mécanisme d'embrayage (12) reliant ladite roue (11) audit rotor (13).

7. Dispositif d'entraînement auxiliaire du type pneumatique pour une bicyclette selon la revendication 6, dans lequel une partie au moins dudit réservoir d'air (30) est agencée dans un espace à l'intérieur d'un élément de cadre (30F) de ladite bicyclette (10).
